# EUROPÄISCHE PATENTANMELDUNG

(11) **EP 1 699 155 A1**
(43) Veröffentlichungstag der Anmeldung: **06.09.2006**
(21) Anmeldenummer: 05004246.4
(22) Anmeldetag: 26.02.2005
(51) Int. Cl.: H04J 14/02

(54) **Verfahren zur Übertragung von Daten**

(71) Anmelder: KEYMILE GmbH, 30179 Hannover (DE)
(72) Erfinder: Puschmann, Norbert, 30826 Garbsen (DE); Ocker, Johannes, 30453 Hannover (DE)
(74) Vertreter: Döring, Roger

(57) **Zusammenfassung**

Es wird ein Verfahren zur Übertragung von Daten in einem Netzwerk angegeben, das Übertragungsstrecken mit leitergebundener Übertragung der Daten aufweist, von denen zumindest eine Übertragungsstrecke als optische Übertragungsstrecke mit Lichtwellenleitern ausgebildet ist. Zur Kapazitätserhöhung werden über einen einzelnen Lichtwellenleiter Daten simultan in entgegengesetzten Übertragungsrichtungen mit zwei unterschiedlichen Wellenlängen übertragen. Zum Ein- bzw. Auskoppeln der Daten an den Enden der jeweiligen Übertragungsstrecke werden handelsübliche Wellenlängen-Multiplexer (WDM1,WDM2) eingesetzt.

## Beschreibung

Die Erfindung bezieht sich auf ein Verfahren zur Übertragung von Daten in einem Netzwerk, das Übertragungsstrecken mit leitergebundener Übertragung der Daten aufweist, von denen zumindest eine Übertragungsstrecke als optische Übertragungsstrecke mit Lichtwellenleitern ausgebildet ist.

In bekannten Netzwerken bzw. Fernmeldenetzen werden Daten bzw. Signale in herkömmlicher Technik über Kupferadern, aber immer mehr auch über Lichtwellenleiter - im folgenden mit "LWL" bezeichnet - übertragen. Die Übertragung der Daten erfolgt beispielsweise im 2. optischen Fenster mit einer Wellenlänge von 1310 nm. Bei dem bekannten, als "HYTAS" bezeichneten Fernmeldenetz wird beispielsweise eine Schaltungsanordnung zur digitalen Datenübertragung über Lichtwellenleiter eingesetzt, bei welcher in einer Vermittlungsstelle ein optischer Leitungsabschluß (OLT) angeordnet ist und bei welcher an den OLT mindestens ein optisches Anschlußleitungsnetz mit einem optischen Verteiler (OLD) angeschlossen ist, mit dem die Teilnehmer des HYTAS verbunden sind (Tagungsband der 36. Post- und Fernmeldetechnischen Fachtagung, 8. bis 9. März 1995, Hannover, Seiten 4.1 bis 4.20).

Zwischen zwei Übertragungsbaugruppen, beispielsweise dem OLD und einer bei einem Teilnehmer vorhandenen Netzwerkeinheit (ONU), werden zum Betrieb jeweils zwei Lichtwellenleiter verwendet - einer für die Richtung hin zum Teilnehmer (Downstream) und einer für die Gegenrichtung (Upstream). Im HYTAS können alle derzeit bekannten und üblichen Dienste zum und vom Teilnehmer übertragen werden. Um zusätzliche Dienste, wie z. B. DSL, zu einem Teilnehmer übertragen zu können, muß die Übertragungskapazität des Netzwerks jedoch vergrößert werden. Das gilt auch für die Gegenrichtung. Das Wort "Teilnehmer" steht dabei nicht nur für einen einzelnen Teilnehmer, sondern es umfaßt beispielsweise auch Reihenhaussiedlungen, Mehrfamilienhäuser, größere Wohneinheiten und/oder Industriekomplexe.

Der Erfindung liegt die Aufgabe zugrunde, das eingangs geschilderte Verfahren so zu gestalten, daß die Übertragungskapazität der optischen Übertragungsstrecken auf einfache Weise erhöht werden kann.

Diese Aufgabe wird gemäß der Erfindung dadurch gelöst,
- daß über einen einzelnen Lichtwellenleiter Daten simultan in entgegengesetzten Übertragungsrichtungen mit zwei unterschiedlichen Wellenlängen übertragen werden und
- daß zum Ein- bzw. Auskoppeln der Daten an den Enden der jeweiligen Übertragungsstrecke handelsübliche Wellenlängen-Multiplexer eingesetzt werden.

Bei diesem Verfahren werden die einzelnen LWL der jeweiligen Übertragungsstrecken doppelt ausgenutzt, nämlich simultan für beide Übertragungsrichtungen. Für die Übertragung in Upstreamrichtung und Downstreamrichtung wird also nur noch ein LWL benötigt, so daß über zwei LWL gegenüber dem bekannten Verfahren beispielsweise die doppelte Datenmenge bidirektional übertragen werden kann. Die Übertragungskapazität einer Übertragungsstrecke kann also mit den vorhandenen LWL beispielsweise verdoppelt werden - zusätzliche LWL werden nicht benötigt. Die in entgegengesetzten Richtungen laufenden Datenströme beeinflussen sich im LWL nicht. Dies umso weniger, als für beide Übertragungsrichtungen unterschiedliche Wellenlängen verwendet werden. Eingesetzt werden mit Vorteil die international bekannten Wellenlängen von 850 nm (1. optisches Fenster, 1310 nm (2. optisches Fenster) und 1550 nm (3. optisches Fenster). Die Übertragung kann also beispielsweise vom OLD zum ONU mit 1310 nm und auf dem gleichen LWL vom ONU zum OLD mit 1550 nm erfolgen. Die Verwendung von zwei unterschiedlichen Wellenlängen bringt neben einer erhöhten Übertragungskapazität den besonderen Vorteil, daß in den jeweiligen Endgeräten von OLD und ONU (oder anderen Baueinheiten) einfache Sender und insbesondere einfache Empfänger eingesetzt werden können, die ohne sogenannte "Splitter" auskommen. Zum Ein- und Auskoppeln der Daten in den einzelnen LWL bzw. aus dem LWL werden bei diesem Verfahren handelsübliche Wellenlängen-Multiplexerim folgenden kurz "WDM" genannt-eingesetzt. Solche WDM arbeiten wellenlängenselektiv, so daß für die einwandfreie Trennung der beiden Wellenlängen grundsätzlich keine zusätzlichen Filter oder andere Bauteile bzw. Schaltungen benötigt werden. Das wird noch dadurch begünstigt, daß die WDM ein richtungsabhängiges Übertragungsverhalten aufweisen - die sogenannte "Directivity -, wodurch das Maß des zu vermeidenden Übersprechens bei der hier vorliegenden bidirektionalen Übertragung niedrig gehalten ist.

Ein handelsüblicher WDM im Sinne der Erfindung ist beispielsweise ein sogenannter "Schmelzkoppler", in dem zwei Glasfasern (LWL) miteinander verschmolzen werden. Die beiden einander berührenden Fasern werden dabei in einem sogenannten Tapervorgang erwärmt und gleichzeitig gezogen. Ausgangsprodukte sind zwei Fasern mit einem Durchmesser von beispielsweise jeweils 125 µm. Nach dem Tapervorgang liegt der Durchmesser im Schmelzbereich zwischen 25µm und 50 µm. Mit einem solchen WDM ist eine Aufteilung nach Leistung und nach Wellenlängen steuerbar. Dazu wird während des Tapervorgangs eine Online-Messung durchgeführt, die eine exakte Bestimmung der gewünschten Aufteilung ermöglicht, - hier also eine Aufteilung nach Wellenlängen.

Um eine gegenseitige Beeinflussung der beiden unterschiedlichen Datenströme weitestgehend auszuschließen, haben die WDMs in bevorzugter Ausführungsform eine Isolation von mindestens 8 dB.

Vorteilhaft kann pro Übertragungsrichtung zumindest einem der WDMs ein Festdämpfungsglied (FOAT) zugeordnet werden. Eventuell auftretendes Restlicht der jeweils anderen Wellenlänge wird durch ein solches FOAT abgeblockt. Bei Einsatz eines FOATs können außerdem einerseits ein maximaler Pegel am Empfänger eingestellt und andererseits die emittierte Lichtleistung gedämpft werden.

Das Verfahren nach der Erfindung wird anhand der Zeichnungen in Ausführungsbeispielen erläutert.

Es zeigen:
Fig. 1 in schematischer Darstellung ein Netzwerk eines Fernmeldenetzes.
Fig. 2 einen Ausschnitt aus Fig. 1 in vergrößerter Darstellung.

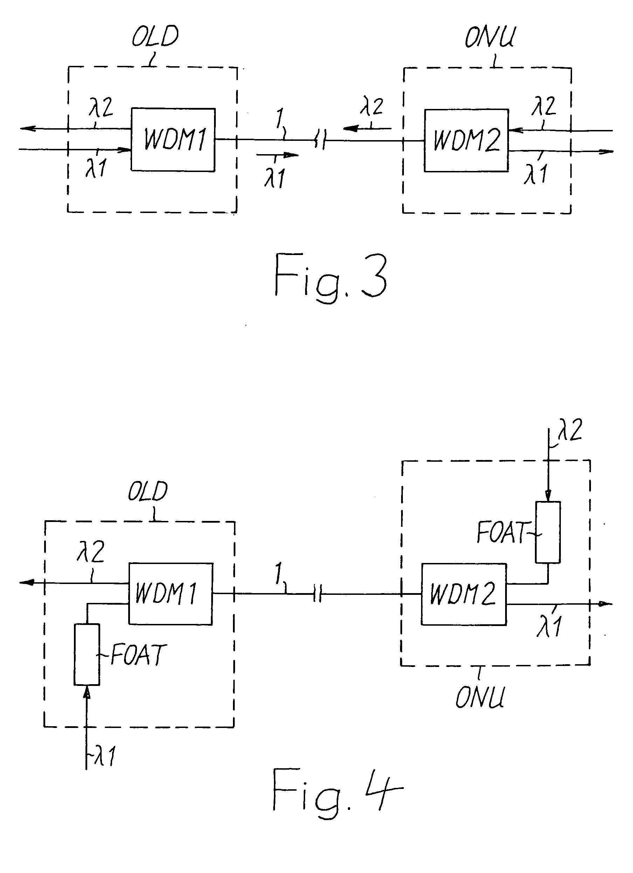

Fig. 3 und 4 zwei unterschiedliche Schaltungsanordnungen zur Durchführung des Verfahrens nach der Erfindung.

Das Verfahren nach der Erfindung ist im Rahmen eines der Datenübertragung dienenden Fernmeidenetzes überall dort einsetzbar, wo optische Übertragungsstrecken mit LWL vorhanden sind. Es wird mit besonderem Vorteil im Teilnehmerbereich eingesetzt. Die Tatsache, daß zur Vervielfachung der Übertragungskapazität keine zusätzlichen LWL benötigt werden, macht sich in diesem Teil des Fernmeldenetzes besonders vorteilhaft bemerkbar.

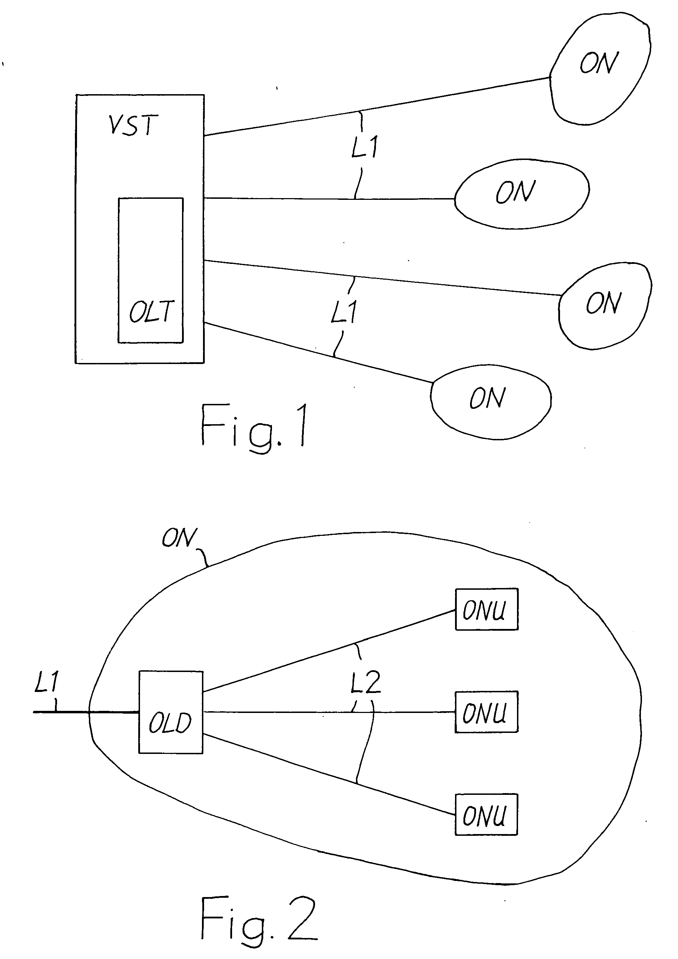

Gemäß Fig. 1 sind an eine Vermittlungsstelle VST, die einen optischen Leitungsabschluß OLT umfaßt, im dargestellten Ausführungsbeispiel vier optische Netze ON über Leitungen L1 angeschlossen, welche LWL enthalten. Die Leitungen L1 enden gemäß Fig. 2 in jedem ON in einem optischen Verteiler OLD, an den im dargestellten Ausführungsbeispiel drei Teilnehmer ONU angeschlossen sind, und zwar über Leitungen L2, in denen jeweils mindestens zwei LWL enthalten sind.

Die Datenübertragung auf den LWL der optischen Übertragungsstrecken erfolgt auf jedem einzelnen LWL bidirektional, und zwar beispielsweise zwischen dem OLD und einem ONU wie folgt:
Sowohl im OLD als auch im ONU ist in den entsprechenden Endgeräten ein WDM in den Übertragungsweg eingeschaltet. Der im OLD vorhandene WDM ist mit WDM 1 und der beim ONU angeordnete mit WDM 2 bezeichnet. Zwischen WDM 1 und WDM 2 verläuft ein LWL 1, der zu einer Leitung L2 gehört.

Zur Datenübertragung in Downstreamrichtung wird dem WDM 1 ein optischer Datenstrom mit einer Wellenlänge λ1 zugeführt. Der Datenstrom wird über den LWL 1 bis zum WDM 2 übertragen und dort weiterverarbeitet. Gleichzeitig kann dem WDM 2 zur Übertragung in Upstreamrichtung ein optischer Datenstrom mit einer Wellenlänge λ2 zugeführt und über den LWL 1 zum WDM 1 übertragen werden. Er wird von dort dem Fernmeldenetz aufgegeben. Die beiden Datenströme laufen gleichzeitig auf dem LWL 1. Ihre Wellenlängen λ1 und λ2 sind unterschiedlich und damit deutlich gegeneinander abgegrenzt. So können beispielsweise die in der optischen Übertragungstechnik üblichen Wellenlängen 1310 nm ± 40 nm als λ1 und 1530 nm ± 50 nm als λ2 verwendet werden. Es können aber auch andere Wellenlängen eingesetzt werden, solange eine sinnvolle Datenübertragung sichergestellt ist. Die auf dem LWL 1 in gegenläufiger Richtung übertragenen Datenströme beeinflussen sich im LWL 1 nicht. Sie können außerdem ohne gegenseitige Beeinflussung in die Bauteile WDM 1 und WDM 2 eingekoppelt und auch wieder aus denselben ausgekoppelt werden.

Um zusätzlich sicherzustellen, daß eventuelles Restlicht der jeweils anderen Wellenlänge nicht in den jeweils anderen Sender eingekoppelt wird, kann zumindest einem der Bauteile WDM 1 und WDM 2 gemäß Fig. 4 auf der Sendeseite jeweils ein Festdämpfungsglied (FOAT) zugeordnet werden. Ein derartiges FOAT wird mit Vorteil jeweils auf der Sendeseite der größeren Wellenlänge - in den angegebenen Beispielen ist es λ2 mit 1550 nm - in den jeweiligen WDM integriert. Durch ein FOAT kann auf einfache Weise ein niedriger Pegel am jeweiligen Empfänger eingestellt werden, damit dieser nicht übersteuert. Ein FOAT dämpft außerdem die emittierte Lichtleistung.

## Patentansprüche

1. Verfahren zur Übertragung von Daten in einem Netzwerk, das Übertragungsstrecken mit leitergebundener Übertragung der Daten aufweist, von denen zumindest eine Übertragungsstrecke als optische Übertragungsstrecke mit Lichtwellenleitern ausgebildet ist, **dadurch gekennzeichnet,**
- **daß** über einen einzelnen Lichtwellenleiter (1) Daten simultan in entgegengesetzten Übertragungsrichtungen mit zwei unterschiedlichen Wellenlängen übertragen werden und
- **daß** zum Ein- bzw. Auskoppeln der Daten an den Enden der jeweiligen Übertragungsstrecke handelsübliche Wellenlängen-Multiplexer (WDM1, WDM2) eingesetzt werden.

2. Verfahren nach Anspruch 1, **dadurch gekennzeichnet, daß** Wellenlängen-Multiplexer (WDM1, WDM2) eingesetzt werden, die eine Isolation von mindestens 8dB haben.

3. Verfahren nach Anspruch 1 oder 2, **dadurch gekennzeichnet, daß** pro Übertragungsrichtung zumindest einem der Wellenlängen-Multiplexer (WDM1, WDM2) ein Festdämpfungsglied (FOAT) zugeordnet wird.

4. Verfahren nach einem der Ansprüche 1 bis 3, **dadurch gekennzeichnet, daß** zur Übertragung der Daten die international bekannten Wellenlängen 850 nm, 1310nm und 1550 nm verwendet werden.

## Geänderte Patentansprüche

### Geänderte Patentansprüche gemäss Regel 86(2) EPÜ.

**1.** Verfahren zur Übertragung von Daten in einem Netzwerk, das Übertragungsstrecken mit leitergebundener Übertragung der Daten aufweist, von denen zumindest eine Übertragungsstrecke als optische Übertragungsstrecke mit Lichtwellenleitern ausgebildet ist, bei welchem über einen einzelnen Lichtwellenleiter (1) einer Übertragungsstrecke Daten simultan in entgegengesetzten Übertragungsrichtungen mit zwei unterschiedlichen Wellenlängen übertragen werden und bei welchem zum Ein- bzw. Auskoppeln der Daten an den Enden der jeweiligen Übertragungsstrecke Wellenlängen-Multiplexer eingesetzt werden, **dadurch gekennzeichnet, daß** als Wellenlängen-Multiplexer handelsübliche, als Schmelzkoppler ausgebildete Wellenlängen-Multiplexer (WDM1, WDM2) verwendet werden, in denen zwei Glasfasern in einem Tapervorgang miteinander verschmolzen werden, und die eine Isolation von mindestens 8 dB aufweisen.

**2.** Verfahren nach Anspruch 1, **dadurch gekennzeichnet, daß** pro Übertragungsrichtung zumindest einem der Wellenlängen-Multiplexer (WDM 1, WDM2) ein Festdämpfungsglied (FOAT) zugeordnet wird.

**3.** Verfahren nach Anspruch 1 oder 2, **dadurch gekennzeichnet, daß** zur Übertragung der Daten die international bekannten Wellenlängen 850 nm, 1310nm und 1550 nm verwendet werden.
